# EUROPEAN PATENT SPECIFICATION

(11) **EP 2 073 509 B1**
(45) Date of publication and mention of the grant of the patent: **02.03.2011**
(21) Application number: 08172054.2
(22) Date of filing: 18.12.2008
(51) Int. Cl.: H04M 1/23, G06F 3/048, G06F 3/033

(54) **Portable electronic device**
Tragbare elektronische Vorrichtung
Appareil electronique portable

(30) Priority: 19.12.2007 TW 96148593
(43) Date of publication of application: 24.06.2009
(73) Proprietor: HTC Corporation, Taoyuan County 330 (TW)
(72) Inventor: Liu, Yi-Ching, 330, Taoyuan Country (TW); Tai, Chih-Wei, 330, Taoyuan City, Taoyuan Country (TW)
(74) Representative: 2K Patentanwälte Blasberg Kewitz & Reichel

(56) References cited:
- WO-A-2008/083858
- GB-A- 2 344 905
- GB-A- 2 402 105

## Description

### Technical Field

The application relates in general to a portable electronic device and in particular to a portable electronic device capable of haptic feedback.

### Description of the Related Art

Traditional mobile phones usually have a dialing keypad on a main surface thereof. When any key of the dialing keypad is pressed, a flexible metal dome corresponding to the key deforms and provides a click feeling to the user as input confirmation for a successful pressed key.

However, since the dialing keypad has many protruding key lids with obvious slits formed therebetween, it is difficult for designers to achieve design of a mobile phone with an integral and smooth profile. Conventional dialing keypads may be replaced by touch pads which have a smooth profile, but the touch pad does not provide a click feeling or haptic feedback to users.

WO 2008/083858 A1, which represents prior art pursuant to Art. 54(3) of the European Patent Convention, discloses a portable electronic device having a first user interface on a front surface of the housing and a second user interface disposed on a rear surface of the housing. Each of the user interfaces is associated with a relatively small interface member that can be manipulated to allow a date input to the device. The interface members enable a 3D navigation on the user interfaces and can be moved for this purpose to thereby activate data input into the device. The interface members are, however, relatively small. An input activation and confirmation function in the sense of the present application is not disclosed.

GB 2 344 905 A discloses a hand held electronic device comprising a casing with a thin display on the front side, and a touch screen or pad, separate from and parallel to the display screen, on the rear side of the device. A cursor on the display screen follows movements of the operative finger (or stylus) of the user as it moves over the touch pad, so that the cursor can be positioned over displayed application icons. An increase in pressure from the finger can be used to select the application. Alternatively, a button, which is disposed on a side surface of the device and is relatively small, can be used to confirm that an entry or selection has been made. An input activation and confirmation function in the sense of the present application is not disclosed.

### Brief Summary

It is an object of the present invention to provide a portable electronic device, offering an easy to operate and reliable input activation and confirmation function.

This problem is solved by a portable electronic device according to claim 1. Further advantageous embodiments are the subject-matter of the dependent claims.

The present application provides a portable electronic device including a first casing, a touch input unit, a switch, and a movable member. The touch input unit and the switch are disposed in the first casing, wherein the touch input unit is exposed to a first surface of the portable electronic device. The movable member is disposed on a second surface of the portable electronic device and is movable relative to the first casing, wherein the second surface is opposite to the first surface. The movable member is coupled with the touch input unit and the switch. Specifically, the movable member activates the switch when pressed.

### BRIEF DESCRIPTION OF DRAWINGS

The application can be more fully understood by reading the subsequent detailed description and examples with references made to the accompanying drawings, wherein:
- FIG. 1: is a perspective diagram of a portable electronic device according to an embodiment of the invention;
- FIG. 2: is a sectional view along X1-X2 of FIG. 1;
- FIG. 3: is a perspective diagram of a movable member when pressed;
- FIG. 4: is a perspective diagram of a portable electronic device according to another embodiment of the invention;
- FIG. 5: is a perspective diagram of a portable electronic device according to another embodiment of the invention; and
- FIG. 6: is a perspective diagram of a portable electronic device according to another embodiment of the invention.

### Detailed Description

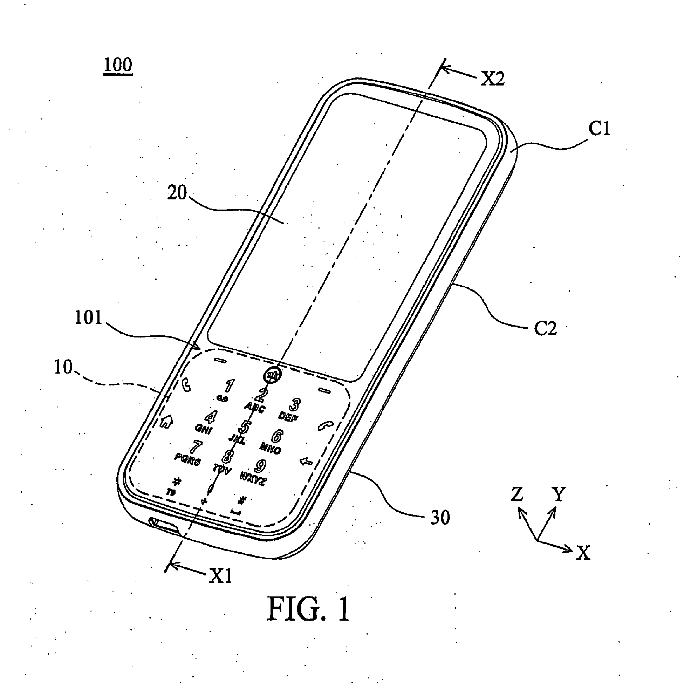

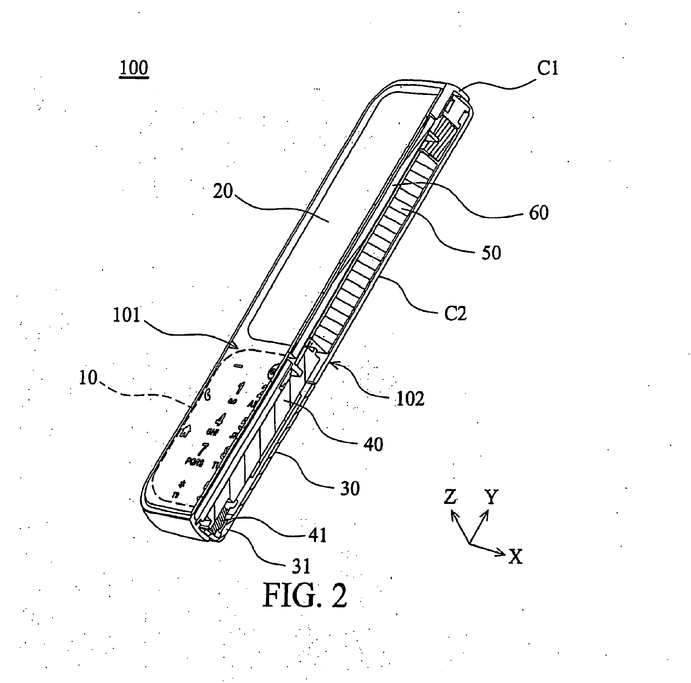

Referring to FIGs. 1 and 2, an embodiment of a portable electronic device 100 (such as a PDA) comprises a first casing C1, a second casing C2, a touch input unit 10, a display 20, a movable member 30, a circuit module 40, a battery 50, and a display module 60. The touch input unit 10 may be a resistive or capacitive touch keypad substantially parallel to an XY plane including a plurality of dialing keys. In this embodiment, the touch input unit 10 and the display 20 are received in the first casing C1, and both of them are exposed to a first surface 101 of the portable electronic device 100. The first surface 101 can be a smooth surface to facilitate an integral and smooth front profile of the portable electronic device 100.

As shown in FIGs. 1 and 2, the movable member 30 and the casing C2 are disposed on a second surface 102 of the portable electronic device 100, opposite to the first surface 101. The movable member 30 is located adjacent to the casing C2 and movable with respect to the first casing C1. In FIG. 2, the circuit module 40 is disposed between the touch input unit 10 and the movable member 30, and the display module 60 is disposed between the display 20 and the battery 50. The circuit module 40 electrically connects to the touch input unit 10 and the display module 60, and the display module 60 electrically connects to the display 20. Users can control the cursor or input data though the touch input unit 10, such as dialing numbers or inputting characters by either typing or handwriting. The circuit module 40 can transmit electronic signals to the display module 60, such that the display 20 shows corresponding contents according to the input from the user.

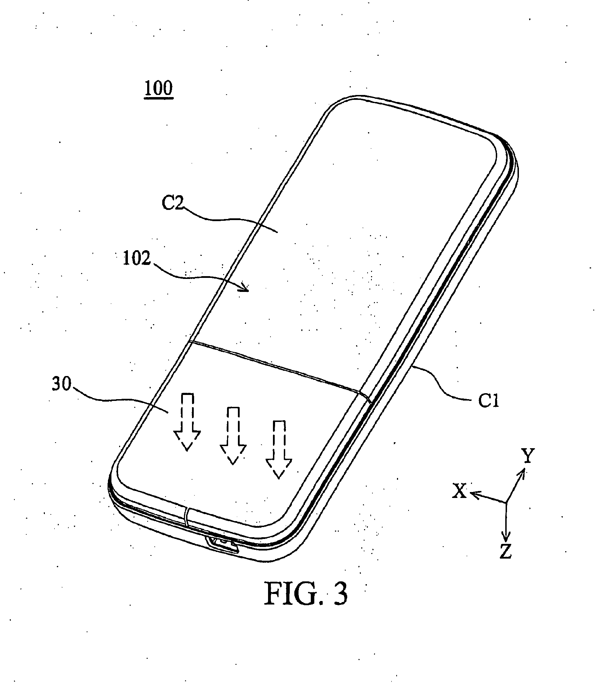

Referring to FIGs. 1-3, when the user holds the portable electronic device 100 with intention to input a data, his thumb can move to any desired position on the touch input unit 10 for data input (upon any number or symbol key shown in FIG. 1), and the other four fingers can push the movable member 30 from the second surface 102, as the arrows indicate in FIG. 3. When the movable member 30 is pressed, a contact portion 31 thereof advances along a first direction (Z axis) and activates a switch 41 on the circuit module 40 (FIG. 2). In some embodiments, the switch 41 may be a mechanical switch or tactile switch capable of providing haptic feedback to the user. When the switch 41 is activated, an active signal is transmitted from the switch 41 to the circuit module 40 for input confirmation, to make sure an input action is completed. On the contrary, if the switch 41 is not activated, any input action on the touch input unit 10 would be invalid, so as to prevent undesired inputting and distinguish between unintentional and intentional touches..

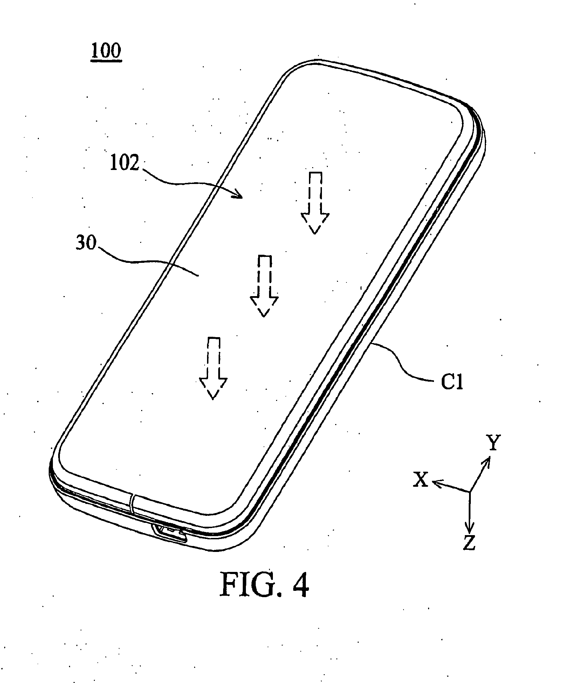

Referring to FIG. 4, another embodiment of the movable member 30 is disposed on the second surface 102 of the portable electronic device 100 and movable relative to the first casing C1 along Z axis, as the arrows indicate in FIG. 4. In this embodiment, the movable member 30 replaces the second casing C2 in FIG. 2 and conceals both of the circuit module 40 and the display module 60. As the movable member 30 has large dimensions, convenience of usage and haptic feedback are improved.

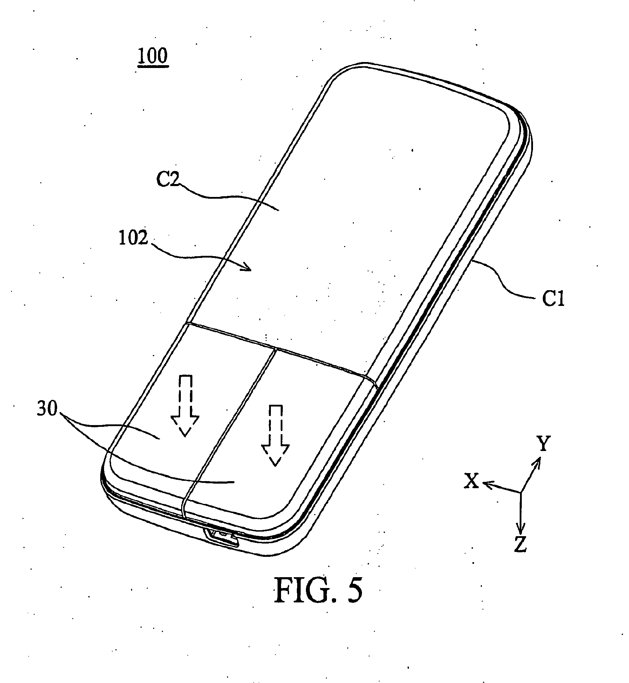

Referring to FIG. 5, another embodiment of the portable electronic device 100 comprises two movable members 30 disposed on the second surface 102. The two movable members 30 are arranged adjacent to the second casing C2 and movable relative to the first casing C1 along Z axis, as the arrows indicate in FIG. 5. In this embodiment, the location of the two movable members 30 correspond to the touch input unit 10 on the first surface 101, thus facilitating haptic feedback and convenient usage for users. When the movable members 30 are pressed, one or more switches on the circuit module 40 are respectively activated for input confirmation, so as to prevent undesired inputting and distinguish between unintentional and intentional touches.

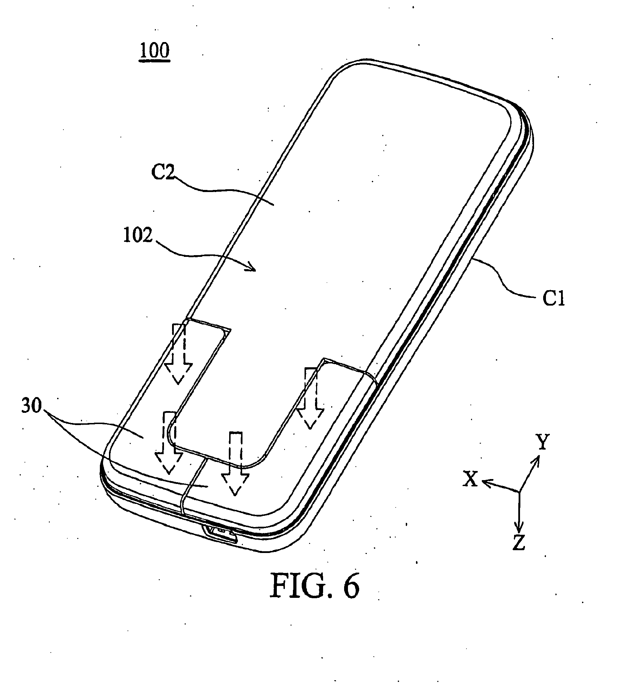

Referring to FIG. 6, another embodiment of the portable electronic device 100 comprises two movable members 30 disposed on the second surface 102. The two movable members 30 are L-shaped and movable relative to the first casing C1 along Z axis, as the arrows indicate in FIG. 6. Location of the two movable members 30 correspond to the touch input unit 10 on the first surface 101, thus facilitating haptic feedback and convenient operation for users. When the movable members 30 are pressed, one or more switches on the circuit module 40 are respectively activated for input confirmation.

The application provides a portable electronic device 100 comprising at least a movable member 30 capable of providing haptic feedback and input confirmation. The user can touch the touch input unit 10 for data input from the first surface 101 with his thumb, and the other fingers can push the movable member 30 from the second surface 102. When the movable member 30 is pressed, the switch 41 is activated for input confirmation, and the movable member 30 provides haptic feedback to the user. Hence, the application can not only prevent undesired input, but also provide an integral and smooth front profile of the portable electronic device 100.

While the invention has been described by way of example and in terms of embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation to encompass all such modifications and similar arrangements.

## Claims

1. A portable electronic device, comprising:
a first casing (C1);
a touch input unit (10), disposed in the first casing and exposed to a first surface (101) of the portable electronic device (100) for receiving input from a user;
at least one switch (41) disposed in the first casing;
a circuit module (40) electrically connected to the touch input unit and the switch;
a display (20);
at least one movable member (30), wherein the switch (41) is, adapted to transmit an active signal to the circuit module (40), when the movable member (30) activates the switch; and
a display module (60) electrically connected to the display (20) and the circuit module (40), wherein when the circuit module receives the active signal from the switch, the display is adapted to show a corresponding content according to the input from the user,
**characterized in that** said movable member (30) is disposed on a second surface (102) of the portable electronic device opposite to the first surface (101), is movable relative to the first casing (C1) along a first direction and conceals the circuit module (40) and at least part of the display module (60),
wherein the movable member (30) is configured to activate the switch when the user handholds the portable electronic device, touches the touch input unit for data input and applies a force to the movable member.

2. The portable electronic device as claimed in claim 1, wherein the display (20) is disposed in the first casing and exposed to the first surface of the portable electronic device, wherein the first surface is a smooth surface with the display and the touch input unit exposed thereto.

3. The portable electronic device as claimed in claim 1 or 2, further comprising a second casing (C2) disposed on the second surface and adjacent to the movable member.

4. The portable electronic device as claimed in any of the preceding claims, wherein the touch input unit (10) comprises a resistive or capacitive touch keypad.

5. The portable electronic device as claimed in any of the preceding claims, wherein the first direction is substantially perpendicular to the first surface.

6. The portable electronic device as claimed in any of the preceding claims, comprising a plurality of said movable members (30), which are disposed on the second surface (102) and movably connected to the first casing.

7. The portable electronic device as claimed in claim 6, wherein the movable members (30) are L-shaped.

8. The portable electronic device as claimed in claim 6 or 7, further comprising a plurality of switches (41) corresponding to the movable members, wherein the movable members respectively activate the switches when pressed.

9. The portable electronic device as claimed in any of the preceding claims, wherein the switch is a mechanical switch.

10. The portable electronic device as claimed in claim 9, wherein the switches are mechanical switches.

## Patentansprüche

1. Tragbares elektronisches Gerät, umfassend:
ein erstes Gehäuse (C1);
eine Berührungs-Eingabeeinheit (10), die in dem ersten Gehäuse angeordnet und zu einer ersten Oberfläche (101) des tragbaren elektronischen Geräts (100) hin frei zugünglich ist, um eine Eingabe von einem Benutzer zu empfangen;
zumindest einen Schalter (41), der in dem ersten Gehäuse angeordnet ist;
ein Schaltungsmodul (40), das mit der Berührangs-Eingabeeinheit und dem Schalter elektrisch verbunden ist;
einen Display (20);
zumindest ein bewegliches Teil (30), wobei der Schalter (41) ausgelegt ist, um ein Aktivsignal an das Schaltungsmodul (40) zu übermitteln, wenn das bewegliche Teil (30) den Schalter aktiviert;
ein Displaymodul (60), das elektrisch mit dem Display (20) und dem Schaltungsmodul (40) verbunden ist, wobei dann, wenn das Schaltungsmodul das Aktivsignal von dem Schalter empfängt, der Display ausgelegt ist, um einen entsprechenden Inhalt in Entsprechung zu der Eingabe von dem Benutzer anzuzeigen;
**dadurch gekennzeichnet, dass** das bewegliche Teil (30) auf einer zweiten Oberfläche (102) des tragbaren elektronischen Geräts gegenüberliegend der ersten Oberfläche (101) angeordnet ist, relativ zu dem ersten Gehäuse (C1) entlang einer ersten Richtung bewegbar ist und das Schaltungsmodul (40) und zumindest einen Teil des Displaymoduls (60) verdeckt,
wobei das bewegliche Teil (30) ausgelegt ist, um den Schalter zu aktivieren, wenn der Benutzer das tragbare elektronische Gerät in der Hand hält, die Berührungs-Eingabeeinheit für eine Dateneingabe berührt und auf das bewegliche Teil eine Kraft ausübt.

2. Tragbares elektronisches Gerät nach Anspruch 1, wobei das Display (20) in dem ersten Gehäuse angeordnet ist und zu der ersten Oberfläche des tragbaren elektronischen Geräts hin frei zugänglich ist, wobei die erste Oberfläche eine glatte bzw, bündige Fläche mit dem Display ist und die Berührungs-Eingabeeinheit dan frei zugänglich ist.

3. Tragbares elektronisches Gerät nach Anspruch 1 oder 2, weiterhin umfassend ein zweites Gehäuse (C2), das auf der zweiten Oberfläche und angrenzend an das bewegliche Teil angeordnet ist.

4. Tragbares elektronisches Gerät nach einem der vorhergehenden Ansprüche, wobei die Berührungs-Eingabeeinheit (10) eine Widerstands-Berührungstastatur oder eine Kapazitäts-Berührungstastatur umfasst.

5. Tragbares elektronisches Gerät nach einem der vorhergehenden Ansprüche, wobei die erste Richtung im Wesentlichen senkrecht zu der ersten Fläche ist.

6. Tragbares elektronisches Gerät nach einem der vorhergehenden Ansprüche, mit einer Mehrzahl der vorgenannten beweglichen Teile (30), die auf der zweiten Oberfläche (102) vorgesehen sind und beweglich mit dem ersten Gehäuse verbunden sind.

7. Tragbares elektronisches Gerät nach Anspruch 6, wobei die beweglichen Teile (30) L-förmig sind.

8. Tragbares elektronisches Gerät nach Anspruch 6 oder 7, weiterhin umfassend eine Mehrzahl von Schaltern (41), die den beweglichen Teilen zugeordnet sind, wobei die beweglichen Teile jeweils die Schalter aktivieren, wenn diese niedergedrückt werden.

9. Tragbares elektronisches Gerät nach einem der vorhergehenden Ansprüche, wobei der Schalter ein mechanischer Schalter ist.

10. Tragbares elektronisches Gerät nach Anspruch 9, wobei die Schalter mechanische Schalter sind.

## Revendications

1. Un appareil électronique portable, comportant:
un premier boîtier (C1) ;
une unité de saisie tactile (10), disposée au sein du premier boîtier et exposée sur une première surface (101) de l'appareil électronique portable (100) pour la saisie de données d'un utilisateur ;
au moins un interrupteur (41) disposé dans le premier boîtier ;
un module de circuit (40) électriquement connecté à l'unité de saisie tactile ainsi qu'à l'interrupteur ;
un écran (20) ;
au moins un membre mobile (30), dans lequel l'interrupteur (41) est adapté à la transmission d'un signal d'activation au module de circuit (40), lorsque le membre mobile (30) actionne l'interrupteur ; et
un module d'affichage (60) électriquement connecté à l'écran (20) et au module de circuit (40), dans lequel l'écran est adapté pour la présentation de contenu en correspondance avec les données saisies par l'utilisateur lorsque le module de circuit reçoit le signal d'activation de l'interrupteur, et
**caractérisé en ce que** ledit membre mobile (30) est disposé sur une deuxième surface (102) de l'appareil électronique portable opposé à la première surface (101), et est mobile par rapport au premier boîtier (C1) suivant une première direction et occulte le module de circuit (40) ainsi qu'au moins une partie du module d'affichage (60),
dans lequel le membre mobile (30) est configuré pour l'actionnement de l'interrupteur lorsque l'utilisateur prend en main l'appareil électronique portable, touche l'unité de saisie tactile pour la saisie de données et applique une force sur le membre mobile.

2. L'appareil électronique portable tel que défini dans la revendication 1, dans lequel l'écran (20) est disposé dans le premier boîtier et exposé sur la première surface de l'appareil électronique portable, dans lequel la première surface est une surface sans rugosité sur laquelle sont disposées l'écran et l'unité de saisie tactile.

3. L'appareil électronique portable tel que défini dans les revendications 1 ou 2, comportant en outre un second boîtier (C2) disposé sur la deuxième surface et adjacent au membre mobile.

4. L'appareil électronique portable tel que défini dans l'une quelconque des revendications précédentes, dans lequel l'unité de saisie tactile (10) comporte un clavier tactile résistif ou capacitif.

5. L'appareil électronique portable tel que défini dans l'une quelconque des revendications précédentes, dans lequel la première direction est substantiellement perpendiculaire à la première surface.

6. L'appareil électronique portable tel que défini dans l'une quelconque des revendications précédentes, comportant une pluralité de membres mobiles (30), qui sont disposés sur la deuxième surface (102) et connectés de manière mobile au premier boîtier.

7. L'appareil électronique portable tel que défini dans la revendication 6, dans lequel les membres mobiles (30) présentent la forme d'un L.

8. L'appareil électronique portable tel que défini dans les revendications 6 ou 7, comportant en outre une pluralité d'interrupteurs (A1) correspondant aux membres mobiles, dans lesquels les membres mobiles actionnent respectivement les interrupteurs lors de leur appui..

9. L'appareil électronique portable tel que défini dans l'une quelconque des revendications précédentes, dans lequel le interrupteur est un interrupteur mécanique.

10. L'appareil électronique portable tel que défini dans la revendication 9, dans lequel les interrupteurs sont des interrupteurs mécaniques.
